# EUROPEAN PATENT SPECIFICATION

(11) **EP 4 319 049 B1**
(45) Date of publication and mention of the grant of the patent: **12.11.2025**
(21) Application number: 23188885.0
(22) Date of filing: 01.08.2023
(51) Int. Cl.: H04L 9/40, H04W 12/122

(54) **IMPROVED ROBUSTNESS OF ARTIFICIAL INTELLIGENCE OR MACHINE LEARNING CAPABILITIES AGAINST COMPROMISED INPUT**
VERBESSERTE ROBUSTHEIT VON KÜNSTLICHER INTELLIGENZ ODER MASCHINENLERNFÄHIGKEITEN GEGEN BEEINTRÄCHTIGTE EINGABE
ROBUSTESSE AMÉLIORÉE DE CAPACITÉS D'INTELLIGENCE ARTIFICIELLE OU D'APPRENTISSAGE AUTOMATIQUE CONTRE UNE ENTRÉE COMPROMISE

(30) Priority: 05.08.2022 IN 202241044885
(43) Date of publication of application: 07.02.2024
(73) Proprietor: Nokia Technologies Oy, 02610 Espoo (FI)
(72) Inventor: PRAVINCHANDRA BHATT, Rakshesh, Bangalore (IN); AGGARWAL, Chaitanya, Munich (DE); MAVUREDDI DHANASEKARAN, Ranganathan, Munich (DE); KHARE, Saurabh, Bangalore (IN)
(74) Representative: Samson & Partner Patentanwälte mbB

(56) References cited:
- WO-A1-2022/161615
- BENZAID CHAFIKA ET AL: "AI for Beyond 5G Networks: A Cyber-Security Defense or Offense Enabler?", IEEE NETWORK, IEEE SERVICE CENTER, NEW YORK, NY, US, vol. 34, no. 6, November 2020 (2020-11-01), pages 140 - 147, XP011823369, ISSN: 0890-8044, [retrieved on 20201202], DOI: 10.1109/MNET.011.2000088
- IDCC: "New key issue on Federated Learning AIML model protection", vol. SA WG3, no. e-meeting; 20220627 - 20220701, 19 June 2022 (2022-06-19), XP052195646, Retrieved from the Internet <URL:https://ftp.3gpp.org/tsg_sa/WG3_Security/TSGS3_107e-AdHoc/Docs/S3-221324.zip S3-221324_Key_Issue_AIML model protection.doc> [retrieved on 20220619]
- LIU YI ET AL: "A Secure Federated Learning Framework for 5G Networks", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 27, no. 4, August 2020 (2020-08-01), pages 24 - 31, XP011806207, ISSN: 1536-1284, [retrieved on 20200817], DOI: 10.1109/MWC.01.1900525

## Description

### Field

Various example embodiments relate to improved robustness of artificial intelligence or machine learning capabilities against compromised input. More specifically, various example embodiments exemplarily relate to measures (including methods, apparatuses and computer program products) for realizing improved robustness of artificial intelligence or machine learning capabilities against compromised input.

### Background

The present specification generally relates to networks, more particularly mobile networks or cellular networks, providing and/or utilizing artificial intelligence (AI) / machine learning (ML) capabilities.

In present mobile networks or cellular networks, AI/ML algorithms are applied to be used for various network optimizations.

Such network optimizations include, for example, network energy saving, load balancing, and mobility optimization.

Network energy saving is an important use case which may involve different layers of the network, with mechanisms operating at different time scales. Cell activation/deactivation is an energy saving scheme in the spatial domain that exploits traffic offloading in a layered structure to reduce the energy consumption of the whole radio access network (RAN). When the expected traffic volume is lower than a fixed threshold, the cells may be switched off, and the served user equipments (UE) may be offloaded to a new target cell. Efficient energy consumption can also be achieved by other means such as reduction of load, coverage modification, or other RAN configuration adjustments. The optimal energy saving decision depends on many factors including the load situation at different RAN nodes, RAN nodes capabilities, key performance indicator (KPI) / quality of service (QoS) requirements, number of active UEs, UE mobility, cell utilization, etc.

The objective of load balancing is to distribute load evenly among cells and among areas of cells, or to transfer part of the traffic from congested cells or from congested areas of cells, or to offload users from one cell, cell area, carrier, or radio access technology (RAT) to improve network performance. This can be done by means of optimization of handover parameters and handover actions. The automation of such optimization can provide high quality user experience, while simultaneously improving the system capacity and also to minimize human intervention in the network management and optimization tasks.

Mobility optimization is a scheme to guarantee service-continuity during the mobility by minimizing the call drops, radio link failures (RLF), unnecessary handovers, and handover ping-pong. For the applications characterized with the stringent QoS requirements such as reliability, latency etc., the quality of experience (QoE) is sensitive to the handover performance, so that mobility management should avoid unsuccessful handover and reduce the latency during handover procedure. However, for the conventional method, it is challengeable for trial-and-error-based scheme to achieve nearly zero-failure handover. The unsuccessful handover cases are the main reason for packet dropping or extra delay during the mobility period, which is unexpected for the packet-drop-intolerant and low-latency applications. In addition, the effectiveness of adjustment based on feedback may be weak due to randomness and inconstancy of transmission environment.

One property of such AI/ML algorithms is that data received/retrieved from various network entities is utilized by the AI/ML algorithms. In particular, different inputs from UEs (like RLF reports, minimization of drive tests (MDT) reports, etc.) can be consumed by various AI/ML algorithms.

The various network entities include, for example, UEs (e.g. terminals), which are out of access by network operators or network infrastructure equipment producers.

Currently, due to provisioning of UEs to actively contribute to the AI/ML operations, various attack scenarios can be envisioned especially when the involved UEs are compromised.

For instance,
- a set of compromised UEs can send false or manipulated data to the AI/ML model training function to skew the performance,
- compromised UEs - if involved in federated learning (FL) - can also provide false hyperparameters during the local training phase, which can then also affect the overall performance and accuracy during the model aggregation phase.

While UE abnormal behavior may be detected, no mechanism to detect compromised UEs which are attacking the AI/ML services using false/manipulated training data or hyperparameters exists.

However, if any of the involved UEs is compromised, it is likely that this compromised UEs' inputs negatively impact the AI/ML algorithms, and, subsequently, affect the automated network optimizations that rely on these algorithms.

Such compromised UEs may impact, for example
- energy saving strategy, such as recommended cell activation/deactivation,
- handover strategy, including recommended candidate cells for taking over the traffic,
- predicted energy efficiency, and
- predicted energy state (e.g., active, high, low, inactive).

Hence, the problem arises that mobile networks or cellular networks utilizing AI/ML algorithms for various network optimizations are vulnerable with respect to compromised network entities' inputs and in particular with respect to (the inputs of) compromised UEs.

There exist approaches for locally detecting and ignoring corrupted data samples in federated learning but without identifying compromised UEs for other network entities. For example, BENZAID CHAFIKA ET AL: "AI for Beyond 5G Networks: A Cyber-Security Defense or Offense Enabler?", IEEE NETWORK, IEEE SERVICE CENTER, NEW YORK, NY, US, vol. 34, no. 6, November 2020, indicates that there are data poisoning attacks for AI in 5G networks and suggests to sanitize the training data by outlier detection and detection of samples that have a detrimental impact on the learning performance. WO 2022/161615 A2 generally indicates that AI model renewal may be required in 5G. IDCC: "New key issue on Federated Learning AIML model protection", 3GPP DRAFT; S3-221324, 3GPP; 19 June 2022, further highlights the need of solutions against poisoning attacks for federated learning in 5G. Finally, LIU Y1 ET AL : "A Secure Federated Learning Framework for 5G Networks", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 27, no. 4, August 2020, proposes a federated learning framework for 5G, indicates the risks of poisoning attacks and provides a solution based on smart contracts in blockchain to validate the model against these attacks.

Hence, there is still a need to provide for improved robustness of artificial intelligence or machine learning capabilities against compromised input.

### Summary

Various example embodiments aim at addressing at least part of the above issues and/or problems and drawbacks.

Various aspects of example embodiments are set out in the appended claims.

According to an exemplary aspect, there is provided a method of a radio access network entity of a mobile or cellular network, the method comprising receiving, from a first machine learning model training data collection entity, first machine learning model training input data, analyzing said first machine learning model training input data for malicious input detection, and deducing, based on a result of said analyzing, whether said first machine learning model training data collection entity is suspected to be compromised. The method is further characterized in that said first machine learning model training input data is for training a machine learning model for network optimization, wherein network optimizations include network energy saving, load balancing, and mobility optimization, and in that the apparatus further comprises transmitting, if said first machine learning model training data collection entity is suspected to be compromised, information to a core network entity indicative of that said first machine learning model training data collection entity is suspected to be compromised.

According to an exemplary aspect, there is provided a corresponding apparatus of a radio access network entity and a corresponding system of a mobile or cellular network.

Further aspects are defined by the appended claims.

Any one of the above aspects enables efficient countermeasures against inputs of compromised network entities', their influence on such AI/ML algorithms utilized in (e.g.) mobile/cellular networks, and their influence on network optimizations utilizing such AI/ML algorithms, to thereby solve at least part of the problems and drawbacks identified in relation to the prior art.

By way of example embodiments, there is provided improved robustness of artificial intelligence or machine learning capabilities against compromised input. More specifically, by way of example embodiments, there are provided measures and mechanisms for realizing improved robustness of artificial intelligence or machine learning capabilities against compromised input.

Thus, improvement is achieved by methods, apparatuses and computer program products enabling/realizing improved robustness of artificial intelligence or machine learning capabilities against compromised input.

### Brief description of the drawings

In the following, the present disclosure will be described in greater detail by way of non-limiting examples with reference to the accompanying drawings, in which
Figure 1 is a block diagram of an apparatus according to example embodiments,
Figure 2 is a block diagram of an apparatus according to example embodiments,
Figure 3 is a block diagram of an apparatus according to example embodiments,
Figure 4 is a block diagram illustrating an apparatus for explanatory reasons,
Figure 5 is a block diagram illustrating an apparatus for explanatory reasons,
Figure 6 is a block diagram illustrating an apparatus for explanatory reasons,
Figure 7 is a schematic diagram of a procedure according to example embodiments,
Figure 8 is a schematic diagram of a procedure according to example embodiments,
Figure 9 is an illustrative schematic diagram of a procedure for explanatory reasons,
Figure 10 is an illustrative schematic diagram of a procedure for explanatory reasons,
Figure 11 (Figures 11 (a), 11 (b), and 11 (c)) shows a schematic diagram of signaling sequences according to example embodiments,
Figure 12 shows an illustrative schematic diagram of signaling sequences for explanatory reasons, and
Figure 13 is a block diagram alternatively illustrating apparatuses according to example embodiments.

### Detailed description

The present disclosure is described herein with reference to particular non-limiting examples and to what are presently considered to be conceivable embodiments. A person skilled in the art will appreciate that the disclosure is by no means limited to these examples, and may be more broadly applied.

It is to be noted that the following description of the present disclosure and its embodiments mainly refers to specifications being used as non-limiting examples for certain exemplary network configurations and deployments. Namely, the present disclosure and its embodiments are mainly described in relation to 3GPP specifications being used as non-limiting examples for certain exemplary network configurations and deployments. As such, the description of example embodiments given herein specifically refers to terminology which is directly related thereto. Such terminology is only used in the context of the presented non-limiting examples, and does naturally not limit the disclosure in any way. Rather, any other communication or communication related system deployment, etc. may also be utilized as long as compliant with the features described herein.

Hereinafter, various embodiments and implementations of the present disclosure and its aspects or embodiments are described using several variants and/or alternatives.

According to example embodiments, in general terms, there are provided measures and mechanisms for (enabling/realizing) improved robustness of artificial intelligence or machine learning capabilities against compromised input.

Data collection as referred to herein means a function that provides input data to AI/ML model training and AI/ML model inference functions. AI/ML algorithm specific data preparation (e.g., data pre-processing and cleaning, formatting, and transformation) is not carried out in the data collection function.

Examples of input data may include measurements from UEs or different network entities, feedback from an actor, output from an AI/ML model:
- Training data: Data needed as input for the AI/ML model training function,
- Inference data: Data needed as input for the AI/ML model inference function.

Model training as referred to herein means a function that performs the AI/ML model training, validation, and testing which may generate model performance metrics as part of the model testing procedure. The model training function is also responsible for data preparation (e.g., data pre-processing and cleaning, formatting, and transformation) based on training data delivered by a data collection function, if required. Model deployment/update is used to initially deploy a trained, validated, and tested AI/ML model to the model inference function or to deliver an updated model to the model inference function.

Model inference as referred to herein means a function that provides AI/ML model inference output (e.g., predictions or decisions). A model inference function may provide model performance feedback to a model training function when applicable. The model inference function is also responsible for data preparation (e.g., data pre-processing and cleaning, formatting, and transformation) based on inference data delivered by a data collection function, if required. An output of a model inference function is the inference output of the AI/ML model produced by a model inference function. Model performance feedback may be used for monitoring the performance of the AI/ML model, when available.

Actor as referred to herein means a function that receives the output from the model inference function and triggers or performs corresponding actions. The actor may trigger actions directed to other entities or to itself. Feedback from an actor is information that may be needed to derive training data, inference data or to monitor the performance of the AI/ML model and its impact to the network through updating of KPIs and performance counters.

Hyperparameters (model hyperparameters) as referred to herein mean a configuration that is external to the model and whose value cannot be estimated from data.

Hyperparameters are often used in processes to help estimate model parameters. Hyperparameters are often specified by the practitioner. Hyperparameters can often be set using heuristics. Hyperparameters are often tuned for a given predictive modeling problem.

As mentioned above, mobile/cellular networks utilizing AI/ML algorithms for various network optimizations are vulnerable with respect to compromised network entities' inputs and in particular with respect to (the inputs of) compromised UEs, as, dependent on the utilization of the inputs and the deviated network optimizations and the respective use cases, these potentially malicious inputs may have substantial impacts on the network operation.

This may even be amplified in view of the RAN's ability to share (compromised) UE information with each other, i.e., among entities of the RAN. For example, the RAN does not understand the subscription permanent identifier (SUPI) as a UE identity. The RAN just knows context (next generation (NG) context), and context to SUPI mapping is available only in the access and mobility management function (AMF).

Therefore, as a concrete example, if a gNB1 detects a UE with an identifier "NG Context-1" as not behaving correctly or as being compromised, then this "NG Context-1" has no meaning in the other gNBs, which, consequently cannot identify the UE being the source of potentially malicious information as a UE detected as not behaving correctly or as being compromised.

As a further concrete example, if the UE is identified as malicious UE at a gNB1, then the UE detaches and attaches back again at gNB2, then for gNB2, this is a fresh UE and previous analysis from gNB1 (including its identification as being malicious) will be lost.

Hence, in brief, according to example embodiments, measures to detect inputs received from compromised UEs towards AI/ML algorithms being used for various network optimizations is provided.

In particular, according to example embodiments, anomaly detection is applied during the pre-processing of data received by AI/ML algorithms.

This measure can detect clear outliers from the input data and eliminate the possible bias of input data in the pre-processing phase of AI/ML algorithms.

Further, according to example embodiments, the data received from UEs in similar locations are statistically correlated to detect slow biases from compromised UEs.

Namely, it is likely that compromised UEs intend to introduce slow biases in the input data consumed by AI/ML algorithms. Such slow biases can be difficult to detect and can affect the AI/ML based network optimizations. According to example embodiments, this measure, i.e., comparing the statistics of the input data received from various UEs in similar locations can help to identify such slow drifts in the data.

Further, according to example embodiments, for model trainings happening on multiple RAN nodes for the same network optimization, or for model trainings happening on a RAN Node and an operations, administration and maintenance (OAM) node for the same network optimization, the analysis done according to measures steps mentioned above (anomaly detection during pre-processing, statistical correlation) can be shared between the entities performing model trainings.

According to example embodiments, further, information on malicious UE behavior (e.g. specific to a particular model or particular analytics (e.g. "model X"/"analytics X")) is shared to other network nodes, in particular other gNBs.

As a concrete example, when a gNB1 detects that the UE (context ID) is malicious, the gNB1 informs the AMF thereof. According to example embodiments, the AMF identifies the SUPI and marks the corresponding UE Context that the UE is not behaving correctly for the particular model or particular analytics (e.g. "model X"/"analytics X").

Alternatively, according to example embodiments, the AMF obtains this information about the malicious UE from a network data analytics function (NWDAF) or the OAM for the particular model or particular analytics (e.g. "model X"/"analytics X").

As a result, according to example embodiments, during the handover or UE attach phase, the AMF notifies the other gNB (to which the UE is handed over or to which the UE is attached) that this UE (UE Context) should not be considered for the particular model or particular analytics (e.g. "model X"/"analytics X").

Example embodiments are specified below in more detail.

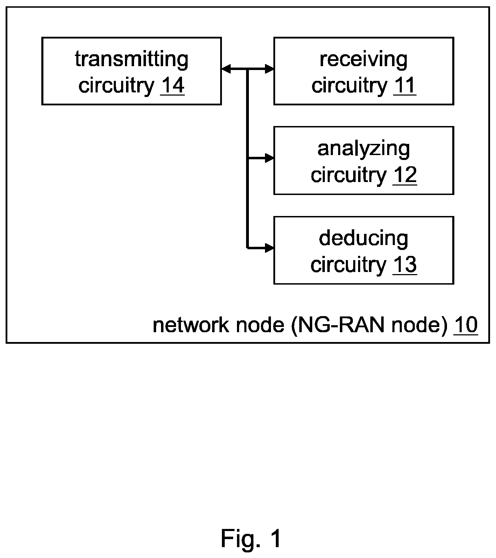

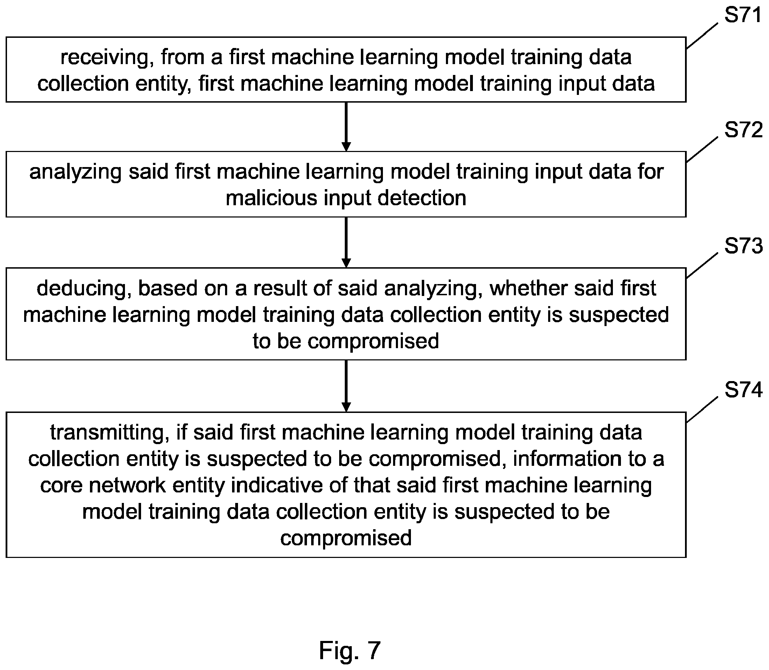

Figure 1 is a block diagram illustrating an apparatus according to example embodiments. The apparatus may be a network node or entity 10 such as a next generation radio access network (NG-RAN) node (or a node or entity providing such functionality) comprising a receiving circuitry 11, an analyzing circuitry 12, a deducing circuitry 13, and a transmitting circuitry 14. The receiving circuitry 11 receives, from a first machine learning model training data collection entity, first machine learning model training input data. The analyzing circuitry 12 analyzes said first machine learning model training input data for malicious input detection. The deducing circuitry 13 deduces, based on a result of said analyzing circuitry, whether said first machine learning model training data collection entity is suspected to be compromised. The transmitting circuitry 14 transmits, if said first machine learning model training data collection entity is suspected to be compromised, information to a core network entity indicative of that said first machine learning model training data collection entity is suspected to be compromised. Figure 7 is a schematic diagram of a procedure according to example embodiments. The apparatus according to Figure 1 may perform the method of Figure 7 but is not limited to this method. The method of Figure 7 may be performed by the apparatus of Figure 1 but is not limited to being performed by this apparatus.

As shown in Figure 7, a procedure according to example embodiments comprises an operation of receiving (S71), from a first machine learning model training data collection entity, first machine learning model training input data, an operation of analyzing (S72) said first machine learning model training input data for malicious input detection, an operation of deducing (S73), based on a result of said analyzing, whether said first machine learning model training data collection entity is suspected to be compromised, and an operation of transmitting (S74), if said first machine learning model training data collection entity is suspected to be compromised, information to a core network entity indicative of that said first machine learning model training data collection entity is suspected to be compromised.

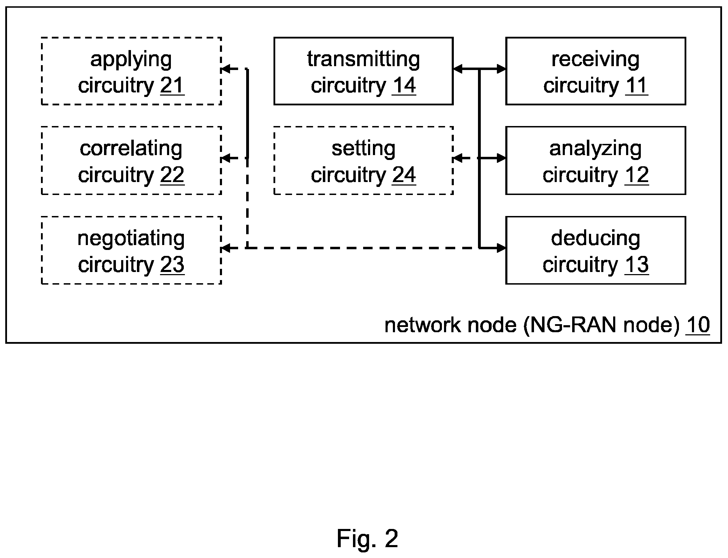

Figure 2 is a block diagram illustrating an apparatus according to example embodiments. In particular, Figure 2 illustrates a variation of the apparatus shown in Figure 1. The apparatus according to Figure 2 may thus further comprise an applying circuitry 21, a correlating circuitry 22, a negotiating circuitry 23, and/or a setting circuitry 24.

In an embodiment at least some of the functionalities of the apparatus shown in Figure 1 (or 2) may be shared between two physically separate devices forming one operational entity. Therefore, the apparatus may be seen to depict the operational entity comprising one or more physically separate devices for executing at least some of the described processes.

According to a variation of the procedure shown in Figure 7, exemplary details of the analyzing operation (S72) are given, which are inherently independent from each other as such. Such exemplary analyzing operation (S72) according to example embodiments may comprise an operation of applying an anomaly detection during machine learning model training data pre-processing of said first machine learning model training input data.

According to a variation of the procedure shown in Figure 7, exemplary additional operations are given, which are inherently independent from each other as such. According to such variation, an exemplary method according to example embodiments may comprise an operation of receiving, from at least one second machine learning model training data collection entity, second machine learning model training input data.

According to a variation of the procedure shown in Figure 7, exemplary details of the analyzing operation (S72) are given, which are inherently independent from each other as such. Such exemplary analyzing operation (S72) according to example embodiments may comprise an operation of statistically correlating said first machine learning model training input data with said second machine learning model training input data to detect biases in said first machine learning model training input data.

According to a variation of the procedure shown in Figure 7, exemplary additional operations are given, which are inherently independent from each other as such. According to such variation, an exemplary method according to example embodiments may comprise an operation of negotiating a handover decision for a third second machine learning model training data collection entity towards said radio access network entity, an operation of receiving, from said core network entity, information indicative of that said third machine learning model training data collection entity is suspected to be compromised, and an operation of setting to ignore third machine learning model training input data from said third machine learning model training data collection entity.

According to further example embodiments, said machine learning model training data collection entity comprises a user equipment, is a user equipment, or is comprised in a user equipment.

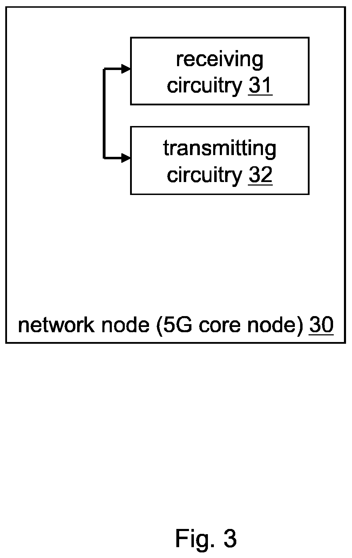

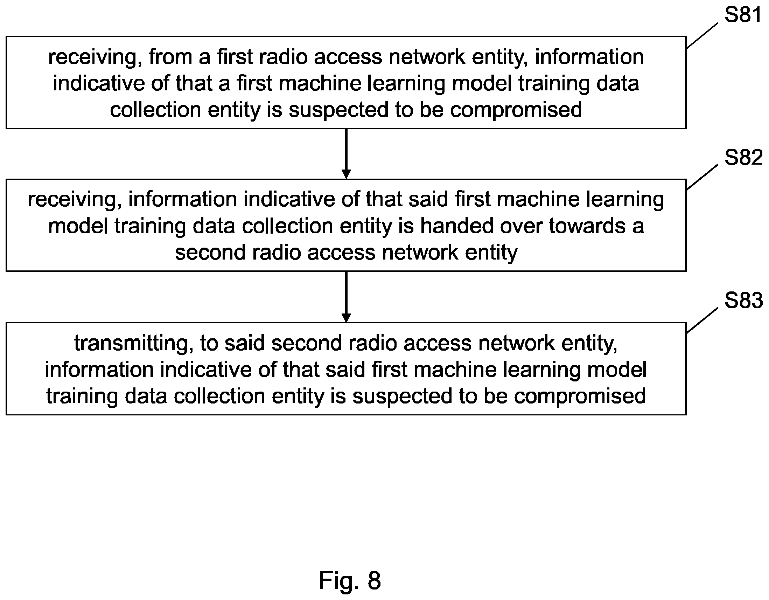

Figure 3 is a block diagram illustrating an apparatus according to example embodiments. The apparatus may be a network node or entity 30 such as a 5^{th} Generation (5G) core node (or a node or entity providing such functionality) comprising a receiving circuitry 31 and a transmitting circuitry 32. The receiving circuitry 31 receives, from a first radio access network entity, information indicative of that a first machine learning model training data collection entity is suspected to be compromised. The receiving circuitry 31 further receives information indicative of that said first machine learning model training data collection entity is handed over towards a second radio access network entity. The transmitting circuitry 32 transmits, to said second radio access network entity, information indicative of that said first machine learning model training data collection entity is suspected to be compromised. Figure 8 is a schematic diagram of a procedure according to example embodiments. The apparatus according to Figure 3 may perform the method of Figure 8 but is not limited to this method. The method of Figure 8 may be performed by the apparatus of Figure 3 but is not limited to being performed by this apparatus.

As shown in Figure 8, a procedure according to example embodiments comprises an operation of receiving (S81), from a first radio access network entity, information indicative of that a first machine learning model training data collection entity is suspected to be compromised, an operation of receiving (S82), information indicative of that said first machine learning model training data collection entity is handed over towards a second radio access network entity, and an operation of transmitting (S83), to said second radio access network entity, information indicative of that said first machine learning model training data collection entity is suspected to be compromised.

In an embodiment at least some of the functionalities of the apparatus shown in Figure 3 may be shared between two physically separate devices forming one operational entity. Therefore, the apparatus may be seen to depict the operational entity comprising one or more physically separate devices for executing at least some of the described processes.

According to a variation of the procedure shown in Figure 8, exemplary additional operations are given, which are inherently independent from each other as such. According to such variation, an exemplary method according to example embodiments may comprise an operation of transmitting, towards a data storage entity, said information indicative of that said first machine learning model training data collection entity is suspected to be compromised.

According to a variation of the procedure shown in Figure 8, exemplary additional operations are given, which are inherently independent from each other as such. According to such variation, an exemplary method according to example embodiments may comprise an operation of transmitting, towards a data analytics entity, a request to obtain an updated confidence value for said first machine learning model training data collection entity, and an operation of receiving, from said data analytics entity, said updated confidence value for said first machine learning model training data collection entity.

According to further example embodiments, said first machine learning model training data collection entity comprises a user equipment, is a user equipment, or is comprised in a user equipment.

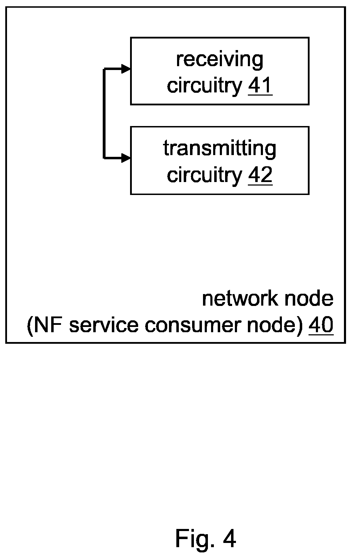

The following description of Figs. 4, 5, 6, 9, and 10 is for illustrative purposes of similar detection techniques for FL only.

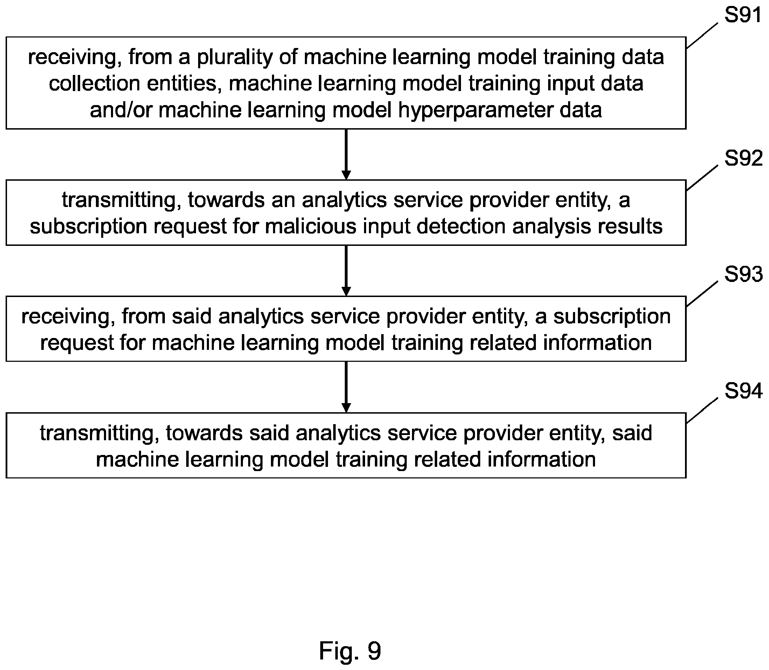

Figure 4 is a block diagram illustrating an apparatus according to example embodiments. The apparatus may be a network node or entity 40 such as a network function (NF) service consumer node (or a node or entity providing such functionality) comprising a receiving circuitry 41 and a transmitting circuitry 42. The receiving circuitry 41 receives, from a plurality of machine learning model training data collection entities, machine learning model training input data and/or machine learning model hyperparameter data. The transmitting circuitry 42 transmits, towards an analytics service provider entity, a subscription request for malicious input detection analysis results. The receiving circuitry 41 receives, from said analytics service provider entity, a subscription request for machine learning model training related information. The transmitting circuitry 42 transmits, towards said analytics service provider entity, said machine learning model training related information. Figure 9 is a schematic diagram of a procedure according to example embodiments. The apparatus according to Figure 4 may perform the method of Figure 9 but is not limited to this method. The method of Figure 9 may be performed by the apparatus of Figure 4 but is not limited to being performed by this apparatus.

As shown in Figure 9, a procedure according to example embodiments comprises an operation of receiving (S91), from a plurality of machine learning model training data collection entities, machine learning model training input data and/or machine learning model hyperparameter data, an operation of transmitting (S92), towards an analytics service provider entity, a subscription request for malicious input detection analysis results, an operation of receiving (S93), from said analytics service provider entity, a subscription request for machine learning model training related information, and an operation of transmitting (S94), towards said analytics service provider entity, said machine learning model training related information.

In an embodiment at least some of the functionalities of the apparatus shown in Figure 4 may be shared between two physically separate devices forming one operational entity. Therefore, the apparatus may be seen to depict the operational entity comprising one or more physically separate devices for executing at least some of the described processes.

According to further example embodiments, said machine learning model training related information includes at least one of
- a machine learning model accuracy,
- identifiers of said plurality of machine learning model training data collection entities,
- said machine learning model training input data and/or machine learning model hyperparameter data, and
- cluster information on a cluster formed by said plurality of machine learning model training data collection entities for federated learning.

According to a variation of the procedure shown in Figure 9, exemplary additional operations are given, which are inherently independent from each other as such. According to such variation, an exemplary method according to example embodiments may comprise an operation of receiving, from said analytics service provider entity, said malicious input detection analysis results.

According to further example embodiments, said malicious input detection analysis results include at least one of
- machine learning model training data collection entities out of said plurality of machine learning model training data collection entities which are suspected to be compromised, and
- a mitigation suggestion.

According to further example embodiments, said machine learning model training data collection entity comprises a user equipment, is a user equipment, or is comprised in a user equipment.

According to further example embodiments, said machine learning model training entity comprises a network function service consumer, is a network function service consumer, or is comprised in a network function service consumer.

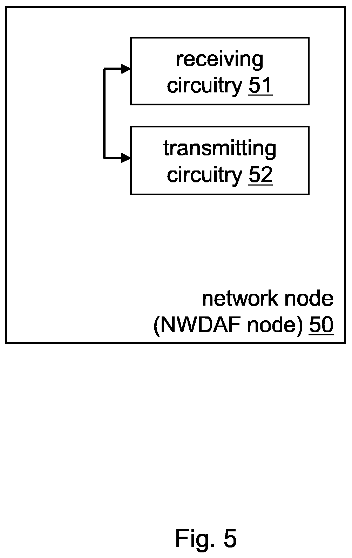

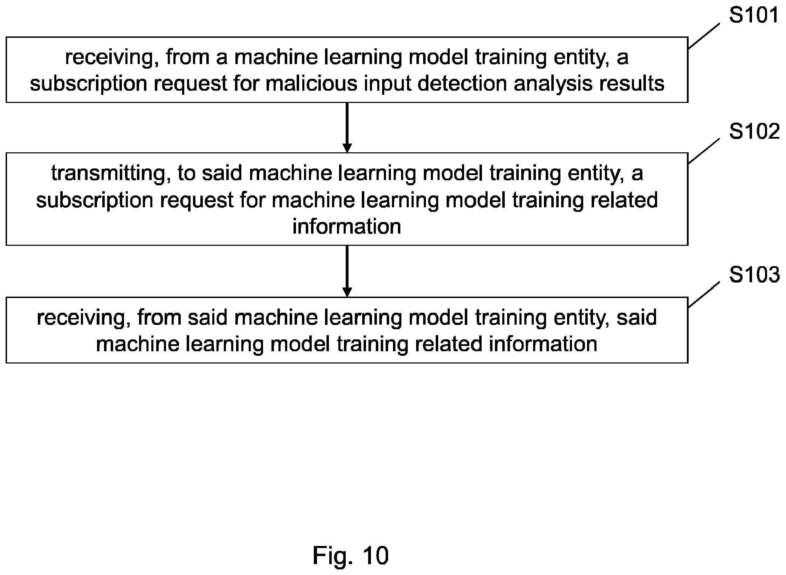

Figure 5 is a block diagram illustrating an apparatus according to example embodiments. The apparatus may be a network node or entity 50 such as a network data analytics function (NWDAF) node (or a node or entity providing such functionality) comprising a receiving circuitry 51 and a transmitting circuitry 52. The receiving circuitry 51 receives, from a machine learning model training entity, a subscription request for malicious input detection analysis results. The transmitting circuitry 52 transmits, to said machine learning model training entity, a subscription request for machine learning model training related information. The receiving circuitry 51 receives, from said machine learning model training entity, said machine learning model training related information. Figure 10 is a schematic diagram of a procedure according to example embodiments. The apparatus according to Figure 5 may perform the method of Figure 10 but is not limited to this method. The method of Figure 10 may be performed by the apparatus of Figure 5 but is not limited to being performed by this apparatus.

As shown in Figure 10, a procedure according to example embodiments comprises an operation of receiving (S101), from a machine learning model training entity, a subscription request for malicious input detection analysis results, an operation of transmitting (S102), to said machine learning model training entity, a subscription request for machine learning model training related information, and an operation of receiving (S103), from said machine learning model training entity, said machine learning model training related information.

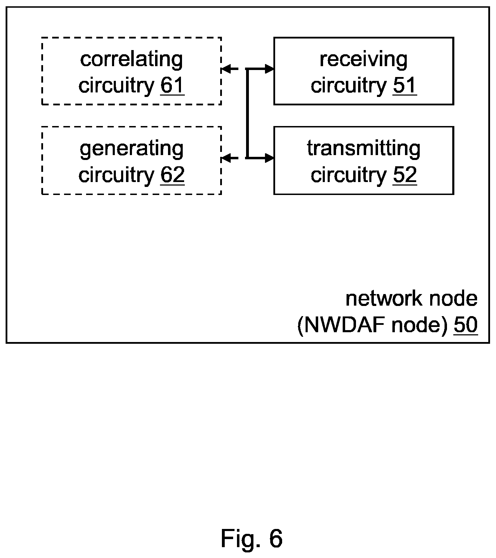

Figure 6 is a block diagram illustrating an apparatus according to example embodiments. In particular, Figure 6 illustrates a variation of the apparatus shown in Figure 5. The apparatus according to Figure 6 may thus further comprise a correlating circuitry 61 and/or a generating circuitry 62.

In an embodiment at least some of the functionalities of the apparatus shown in Figure 5 (or 6) may be shared between two physically separate devices forming one operational entity. Therefore, the apparatus may be seen to depict the operational entity comprising one or more physically separate devices for executing at least some of the described processes.

According to further example embodiments, said machine learning model training related information includes at least one of
- a machine learning model accuracy,
- identifiers of a plurality of machine learning model training data collection entities providing machine learning model training input data and/or machine learning model hyperparameter data to said machine learning model training entity,
- said machine learning model training input data and/or machine learning model hyperparameter data, and
- cluster information on a cluster formed by said plurality of machine learning model training data collection entities for federated learning.

According to a variation of the procedure shown in Figure 10, exemplary additional operations are given, which are inherently independent from each other as such. According to such variation, an exemplary method according to example embodiments may comprise an operation of statistically correlating said machine learning model training input data and/or machine learning model hyperparameter data to detect deviations in said machine learning model training input data and/or machine learning model hyperparameter data.

According to a variation of the procedure shown in Figure 10, exemplary additional operations are given, which are inherently independent from each other as such. According to such variation, an exemplary method according to example embodiments may comprise an operation of generating, based on said correlating, said malicious input detection analysis results, and an operation of transmitting, to said machine learning model training entity, said malicious input detection analysis results.

According to further example embodiments, said malicious input detection analysis results include at least one of
- machine learning model training data collection entities out of said plurality of machine learning model training data collection entities which are suspected to be compromised, and
- a mitigation suggestion.

According to a variation of the procedure shown in Figure 10, exemplary additional operations are given, which are inherently independent from each other as such. According to such variation, an exemplary method according to example embodiments may comprise an operation of transmitting, to a federated learning server entity, a request for at least one cluster identifier corresponding to at least one identifier of a machine learning model training data collection entity of said plurality of machine learning model training data collection entities, and an operation of receiving, from said federated learning server entity, said at least one cluster identifier.

According to further example embodiments, said machine learning model training entity comprises a user equipment, is a user equipment, or is comprised in a user equipment.

According to further example embodiments, said analytics service provider entity comprises a network data analytics function, is a network data analytics function, or is comprised in a network data analytics function.

Example embodiments outlined and specified above are explained below in more specific terms.

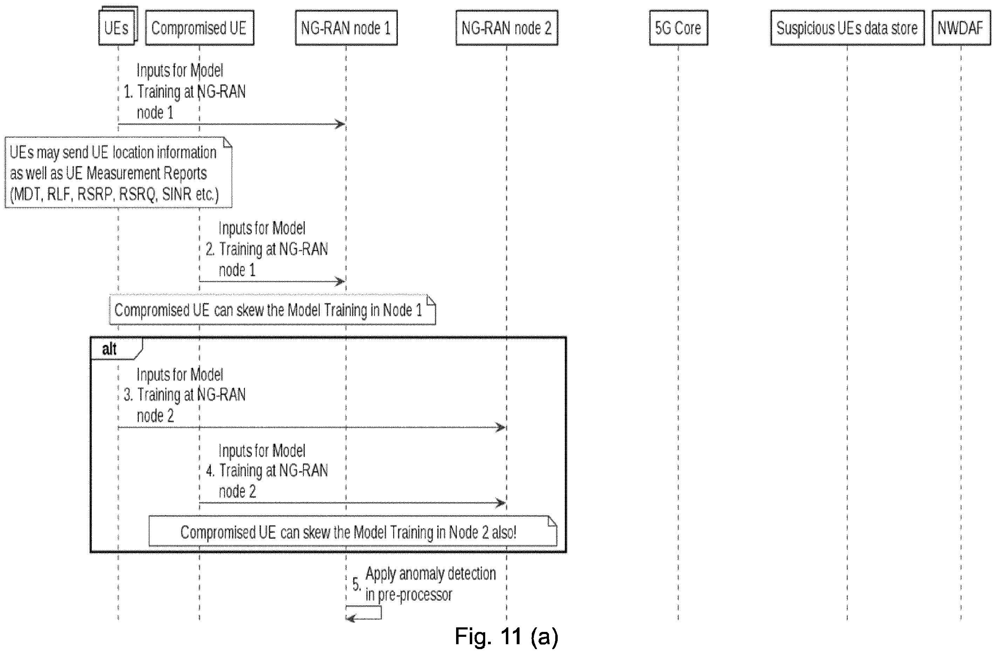

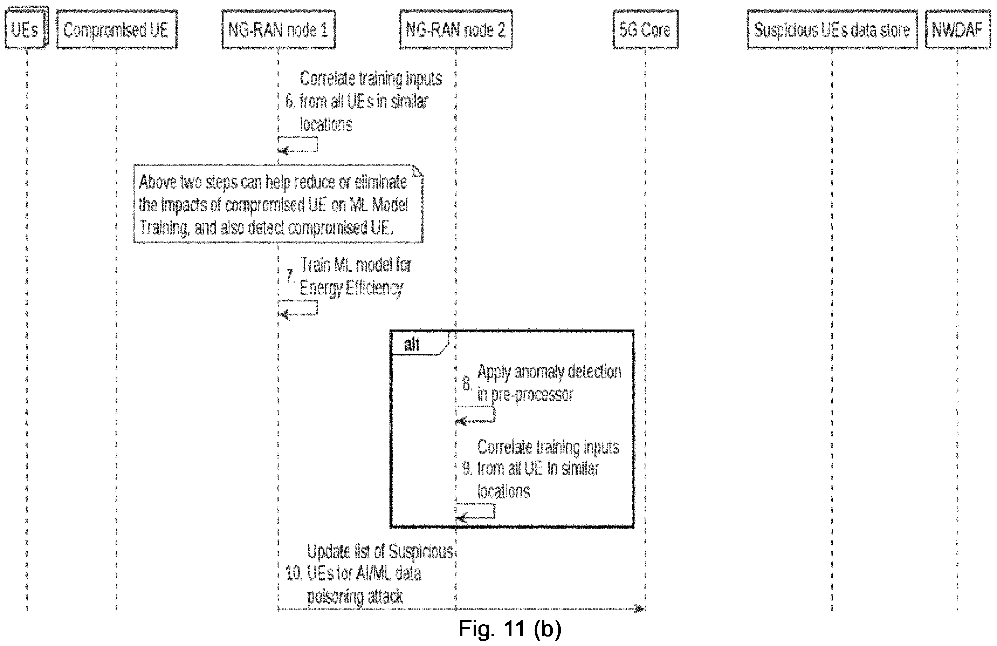

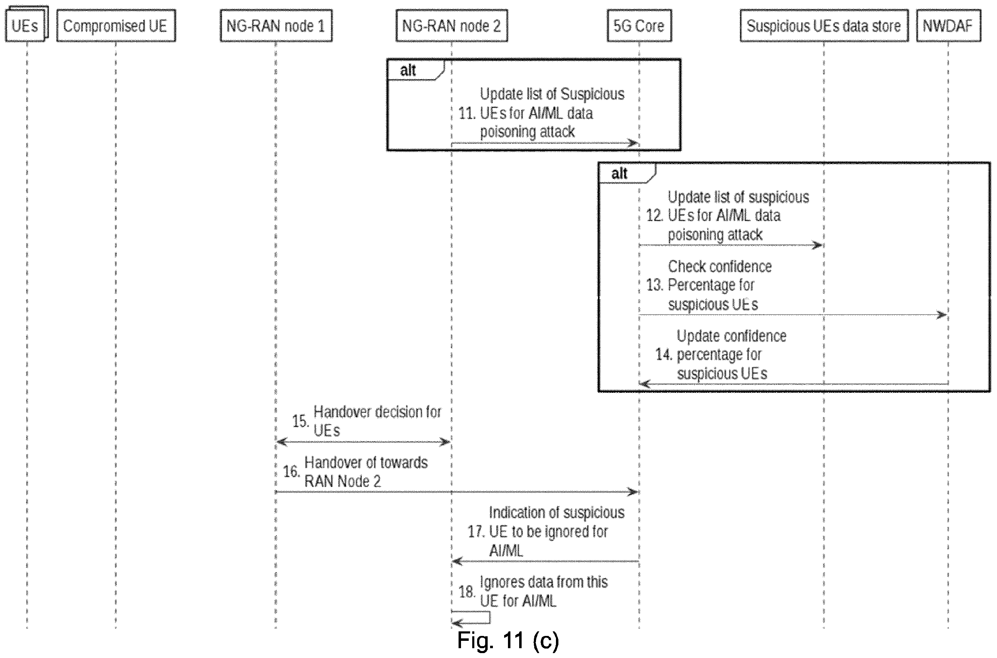

Figure 11 (Figures 11 (a), 11 (b), and 11 (c)) shows a schematic diagram of signaling sequences according to example embodiments, and in particular illustrates an overview of a RAN procedure according to example embodiments for the energy saving example. Here, Figure 11 (b) is a continuation of Figure 11 (a), and Figure 11 (c) is a continuation of Figure 11 (b).

In Figure 11, "Compromised UE" is the UE which is already being attacked and compromised by the attacker.

The intention of this compromised UE is to send corrupted model training data to both NG-RANs, which could result in corruption of the models in the NG-RANs. "NG-RAN node 1" and "NG-RAN node 2" are assumed to have the AI/ML model training functionality.

In a step 1 of Figure 11, "normal" UEs share the inputs for the model training to NG-RAN node 1. The UEs could send the measurement reports with reference signal received power (RSRP) measurement, reference signal received quality (RSRQ) measurement, signal-to-noise and interference ratio (SINR) measurement, etc. or raw location co-ordinates, serving cell ID, moving velocity in UE location information message or MDT measurements, radio resource management (RRM) measurements.

In a step 2 of Figure 11, the compromised UEs could send the corrupted model training to NG-RAN node 1, which could result in corrupting the Model training in Node 1.

In a step 3 of Figure 11, the normal UEs share the inputs for the model training to the NG-RAN node 2.

In a step 4 of Figure 11, the compromised UEs could send the corrupted model training to NG-RAN node 2, which could result in corrupting the Model training in Node 2.

In a step 5 of Figure 11, according to example embodiments, the NG-RAN node 1 applies anomaly detection in the data pre-processor. According to example embodiments, this measure can eliminate the clear outliers and prevent those from impacting the AI/ML model training.

In a step 6 of Figure 11, according to example embodiments, the NG-RAN node 1 correlates training inputs from all UEs in similar locations. This step also includes statistically correlating the input data received from various UEs in similar locations, and detecting possible slow drifts in data that may be introduced by compromised UEs.

According to example embodiments, the measures of steps 5 and 6 of Figure 11 help to reduce or eliminate the impacts of compromised UEs on ML model training and also detect the compromised UEs (potentially isolate them for further message exchange). According to example embodiments, this information is used to isolate compromised UEs and to reduce system level impacts due to such UEs.

In a step 7 of Figure 11, the NG-RAN node 1 trains the ML model for (according to the exemplary use case) energy efficiency (other models may also be trained depending on use-case, for example for load balancing, mobility optimizations).

In steps 8 and 9 of Figure 11, according to example embodiments, the NG-RAN node 2 repeats the steps 5 and 6 similar to NG RAN node 1, if the model training is also implemented in NG-RAN node 2.

In a step 10 of Figure 11, according to example embodiments, the NG-RAN node 1 updates/notifies the 5GC (e.g. AMF) about detected UEs which are suspicious to be compromised, and, are potential sources of data poisoning attacks.

In a step 11 of Figure 11, according to example embodiments, other NG-RAN nodes (like NG-RAN node 2 illustrated in Figure 11), which also detect compromised UEs, update/notify 5GC about detected UEs which are suspicious to be compromised, and, are potential sources of data poisoning attacks.

In a step 12 of Figure 11, according to example embodiments, the 5GC maintains a common repository with a list of suspicious UEs posing threat to AI/ML models.

In steps 13 and 14 of Figure 11, according to example embodiments, the 5GC may also check with NWDAF or management data analytics service (MDAS) to obtain an updated confidence percentage for suspicious UEs. According to example embodiments, this can then be used to isolate malicious UEs from the network, depending upon the confidence percentage.

In a step 15 of Figure 11, in some use-cases like energy saving, the inference of AI/ML algorithms may lead to a handover decision made between NG-RAN node 1 and node 2 for some UEs. The handover decision may also be made by other mechanisms.

In a step 16 of Figure 11, the handover procedure from NG-RAN node 1 to NG-RAN node 2 is indicated to 5GC for the UEs as indicated from AI/ML inferences (or the other mechanisms).

In a step 17 of Figure 11, according to example embodiments, the 5GC indicates suspicious UEs from the list of UEs for which handover is being triggered to the target NG-RAN node 2.

In a step 18 of Figure 11, according to example embodiments, the NG-RAN node 2 ignores the data from suspicious UEs for AI/ML model training and inferences.

As the AMF/Core is aware of UEs behaving malicious for a particular analytics/model (e.g. "analytics X"/"model X"), when such a UE freshly attaches to the gNB where the particular analytics/model (e.g. "analytics X"/"model X") is running, according to example embodiments, the AMF informs the gNB to exclude the UE for the particular analytics/model (e.g. "analytics X"/"model X").

According to further example embodiments, the NG-RAN node 2 exchanges the data pre-processor information with respect to the UE specific data validity. This pre-processor information needs to be exchanged via the core network (e.g. AMF). If the particular models exist in multiple NG-RAN nodes, then the data pre-processor can exchange the information about the UE specific training data validity and enhance the data pre-processor to detect the compromised UEs.

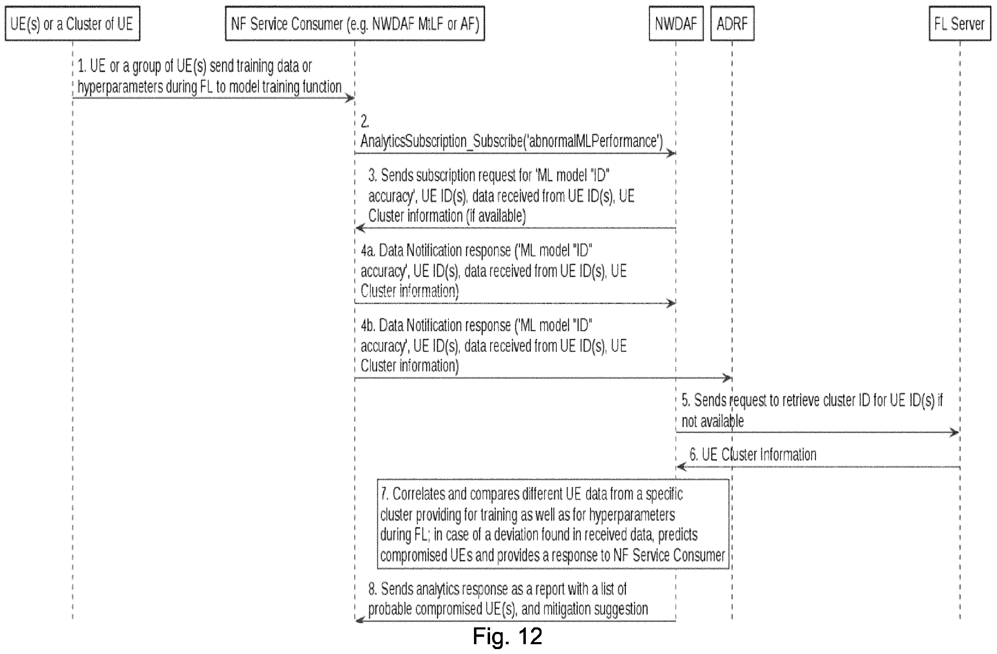

The following description of Fig. 12 is for illustrative purposes of similar detection techniques for FL.

Figure 12 shows a schematic diagram of signaling sequences according to example embodiments, and in particular illustrates an overview of a 5G core focused procedure according to example embodiments for a federated learning scenario.

In a step 1 of Figure 12, an UE or a group of UE(s) shares the training data or hyperparameters during FL to the model training function.

In a step 2 of Figure 12, a model training function (for instance NWDAF model training logical function (MtLF) or a third-party application function (AF)) constantly tracks the model performance and accuracy when receiving the UE(s) input either in the form of input data for training, or in the form of hyperparameters during FL model aggregation functionality According to example embodiments, the NF service consumer subscribes for the "abnormalMLperformance" analytics to NWDAF node.

In a step 3 of Figure 12, according to example embodiments, the NWDAF sends a subscription request for "ML model ID accuracy, UE-IDs, data received from UE ID, UE cluster information" to the NF service consumer.

In a step 4a of Figure 12, according to example embodiments, the NWDAF receives the data notification response with "ML model ID accuracy, UE-IDs, data received from UE ID, UE cluster information" from the NF service consumer.

Alternatively or in addition, in a step 4b of Figure 12, according to example embodiments, the NF service consumer sends the same notification to ARDF.

In a step 5 of Figure 12, according to example embodiments, the NWDAF sends a request to an FL server to retrieve a cluster ID for the UE ID if not available.

In a step 6 of Figure 12, according to example embodiments, the FL server responds with UE cluster information.

In a step 7 of Figure 12, according to example embodiments, the NWDAF correlates and compares different UE data from a specific cluster providing for ML training as well as the hyperparameters during FL. In case of a deviation found in the received data, the NWDAF predicts the compromised UEs and provides a response accordingly.

In a step 8 of Figure 12, according to example embodiments, the NWDAF sends the analytics response as a report with a list of probable compromised UE(s) and mitigated suggestions.

It is noted that currently the FL happens between UE and a third-party AF, and the above explanation is primarily directed to such scenario. However, example embodiments as explained above are also applicable to deviating scenarios, e.g. when the FL happens in later releases between the UE and 5G Core NFs.

According to example embodiments, advantageously, compromised UEs attempting to send corrupt data towards AI/ML services can be detected, and input from such devices can be ignored. This can help eliminating any negative impacts of compromised UEs on AI/ML based network optimizations.

According to example embodiments, advantageously, if possible, such devices, i.e., compromised UEs attempting to send corrupt data towards AI/ML services, can be isolated.

The above-described procedures and functions may be implemented by respective functional elements, processors, or the like, as described below.

In the foregoing exemplary description of the network entity, only the units that are relevant for understanding the principles of the disclosure have been described using functional blocks. The network entity may comprise further units that are necessary for its respective operation. However, a description of these units is omitted in this specification. The arrangement of the functional blocks of the devices is not construed to limit the disclosure, and the functions may be performed by one block or further split into sub-blocks.

When in the foregoing description it is stated that the apparatus, i.e. network node or entity (or some other means) is configured to perform some function, this is to be construed to be equivalent to a description stating that a (i.e. at least one) processor or corresponding circuitry, potentially in cooperation with computer program code stored in the memory of the respective apparatus, is configured to cause the apparatus to perform at least the thus mentioned function. Also, such function is to be construed to be equivalently implementable by specifically configured circuitry or means for performing the respective function (i.e. the expression "unit configured to" is construed to be equivalent to an expression such as "means for").

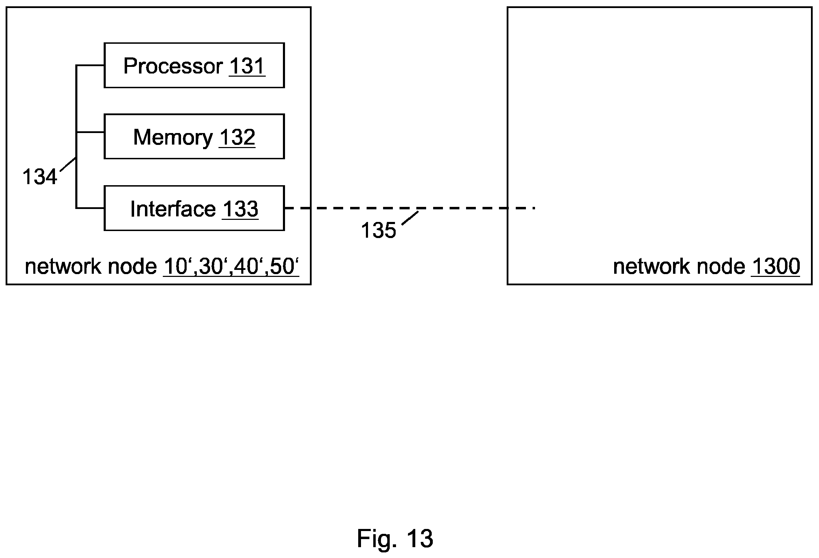

In Figure 13, an alternative illustration of apparatuses according to example embodiments is depicted. As indicated in Figure 13, according to example embodiments, the apparatus (network node) 10', 30', 40', 50' (corresponding to the network node 10, 30, 40, 50) comprises a processor 131, a memory 132 and an interface 133, which are connected by a bus 134 or the like. The apparatuses 10', 30', 40', 50' may be connected to another apparatus 1300 (an interface thereof) via link 135, respectively. According to example embodiments, the another apparatus 1300 may be another one of the apparatuses 10', 30', 40', 50'.

The processor 131 and/or the interface 133 may also include a modem or the like to facilitate communication over a (hardwire or wireless) link, respectively. The interface 133 may include a suitable transceiver coupled to one or more antennas or communication means for (hardwire or wireless) communications with the linked or connected device(s), respectively. The interface 133 is generally configured to communicate with at least one other apparatus, i.e. the interface thereof.

The memory 132 may store respective programs assumed to include program instructions or computer program code that, when executed by the respective processor, enables the respective electronic device or apparatus to operate in accordance with the example embodiments.

In general terms, the respective devices/apparatuses (and/or parts thereof) may represent means for performing respective operations and/or exhibiting respective functionalities, and/or the respective devices (and/or parts thereof) may have functions for performing respective operations and/or exhibiting respective functionalities.

When in the subsequent description it is stated that the processor (or some other means) is configured to perform some function, this is to be construed to be equivalent to a description stating that at least one processor, potentially in cooperation with computer program code stored in the memory of the respective apparatus, is configured to cause the apparatus to perform at least the thus mentioned function. Also, such function is to be construed to be equivalently implementable by specifically configured means for performing the respective function (i.e. the expression "processor configured to [cause the apparatus to] perform xxx-ing" is construed to be equivalent to an expression such as "means for xxx-ing").

According to example embodiments, an apparatus representing the network node or entity 10 comprises at least one processor 131, at least one memory 132 including computer program code, and at least one interface 133 configured for communication with at least another apparatus. The processor (i.e. the at least one processor 131, with the at least one memory 132 and the computer program code) is configured to perform receiving, from a first machine learning model training data collection entity, first machine learning model training input data (thus the apparatus comprising corresponding means for receiving), to perform analyzing said first machine learning model training input data for malicious input detection (thus the apparatus comprising corresponding means for analyzing), to perform deducing, based on a result of said analyzing, whether said first machine learning model training data collection entity is suspected to be compromised (thus the apparatus comprising corresponding means for deducing), and to perform transmitting, if said first machine learning model training data collection entity is suspected to be compromised, information to a core network entity indicative of that said first machine learning model training data collection entity is suspected to be compromised (thus the apparatus comprising corresponding means for transmitting).

According to example embodiments, an apparatus representing the network node or entity 30 comprises at least one processor 131, at least one memory 132 including computer program code, and at least one interface 133 configured for communication with at least another apparatus. The processor (i.e. the at least one processor 131, with the at least one memory 132 and the computer program code) is configured to perform receiving, from a first radio access network entity, information indicative of that a first machine learning model training data collection entity is suspected to be compromised (thus the apparatus comprising corresponding means for receiving), to perform receiving information indicative of that said first machine learning model training data collection entity is handed over towards a second radio access network entity, and to perform transmitting, to said second radio access network entity, information indicative of that said first machine learning model training data collection entity is suspected to be compromised (thus the apparatus comprising corresponding means for transmitting).

According to example embodiments, an apparatus representing the network node or entity 40 comprises at least one processor 131, at least one memory 132 including computer program code, and at least one interface 133 configured for communication with at least another apparatus. The processor (i.e. the at least one processor 131, with the at least one memory 132 and the computer program code) is configured to perform receiving, from a plurality of machine learning model training data collection entities, machine learning model training input data and/or machine learning model hyperparameter data (thus the apparatus comprising corresponding means for receiving), to perform transmitting, towards an analytics service provider entity, a subscription request for malicious input detection analysis results (thus the apparatus comprising corresponding means for transmitting), to perform receiving, from said analytics service provider entity, a subscription request for machine learning model training related information, and to perform transmitting, towards said analytics service provider entity, said machine learning model training related information.

According to example embodiments, an apparatus representing the network node or entity 50 comprises at least one processor 131, at least one memory 132 including computer program code, and at least one interface 133 configured for communication with at least another apparatus. The processor (i.e. the at least one processor 131, with the at least one memory 132 and the computer program code) is configured to perform receiving, from a machine learning model training entity, a subscription request for malicious input detection analysis results (thus the apparatus comprising corresponding means for receiving), to perform transmitting, to said machine learning model training entity, a subscription request for machine learning model training related information (thus the apparatus comprising corresponding means for transmitting), and to perform receiving, from said machine learning model training entity, said machine learning model training related information.

For further details regarding the operability/functionality of the individual apparatuses, reference is made to the above description in connection with any one of Figures 1 to 12, respectively.

For the purpose of the present disclosure as described herein above, it should be noted that
- method steps likely to be implemented as software code portions and being run using a processor at a network server or network entity (as examples of devices, apparatuses and/or modules thereof, or as examples of entities including apparatuses and/or modules therefore), are software code independent and can be specified using any known or future developed programming language as long as the functionality defined by the method steps is preserved;
- generally, any method step is suitable to be implemented as software or by hardware without changing the idea of the embodiments and its modification in terms of the functionality implemented;
- method steps and/or devices, units or means likely to be implemented as hardware components at the above-defined apparatuses, or any module(s) thereof, (e.g., devices carrying out the functions of the apparatuses according to the embodiments as described above) are hardware independent and can be implemented using any known or future developed hardware technology or any hybrids of these, such as MOS (Metal Oxide Semiconductor), CMOS (Complementary MOS), BiMOS (Bipolar MOS), BiCMOS (Bipolar CMOS), ECL (Emitter Coupled Logic), TTL (Transistor-Transistor Logic), etc., using for example ASIC (Application Specific IC (Integrated Circuit)) components, FPGA (Field-programmable Gate Arrays) components, CPLD (Complex Programmable Logic Device) components or DSP (Digital Signal Processor) components;
- devices, units or means (e.g. the above-defined network entity or network register, or any one of their respective units/means) can be implemented as individual devices, units or means, but this does not exclude that they are implemented in a distributed fashion throughout the system, as long as the functionality of the device, unit or means is preserved;
- an apparatus like the user equipment and the network entity /network register may be represented by a semiconductor chip, a chipset, or a (hardware) module comprising such chip or chipset; this, however, does not exclude the possibility that a functionality of an apparatus or module, instead of being hardware implemented, be implemented as software in a (software) module such as a computer program or a computer program product comprising executable software code portions for execution/being run on a processor;
- a device may be regarded as an apparatus or as an assembly of more than one apparatus, whether functionally in cooperation with each other or functionally independently of each other but in a same device housing, for example.

In general, it is to be noted that respective functional blocks or elements according to above-described aspects can be implemented by any known means, either in hardware and/or software, respectively, if it is only adapted to perform the described functions of the respective parts. The mentioned method steps can be realized in individual functional blocks or by individual devices, or one or more of the method steps can be realized in a single functional block or by a single device.

Generally, any method step is suitable to be implemented as software or by hardware without changing the idea of the present disclosure. Devices and means can be implemented as individual devices, but this does not exclude that they are implemented in a distributed fashion throughout the system, as long as the functionality of the device is preserved. Such and similar principles are to be considered as known to a skilled person.

Software in the sense of the present description comprises software code as such comprising code means or portions or a computer program or a computer program product for performing the respective functions, as well as software (or a computer program or a computer program product) embodied on a tangible medium such as a computer-readable (storage) medium having stored thereon a respective data structure or code means/portions or embodied in a signal or in a chip, potentially during processing thereof.

In view of the above, there are provided measures for improved robustness of artificial intelligence or machine learning capabilities against compromised input. Such measures exemplarily comprise receiving, from a first machine learning model training data collection entity, first machine learning model training input data, analyzing said first machine learning model training input data for malicious input detection, deducing, based on a result of said analyzing, whether said first machine learning model training data collection entity is suspected to be compromised, and transmitting, if said first machine learning model training data collection entity is suspected to be compromised, information to a core network entity indicative of that said first machine learning model training data collection entity is suspected to be compromised. Even though the disclosure is described above with reference to the examples according to the accompanying drawings, it is to be understood that the disclosure is not restricted thereto. Rather, it is apparent to those skilled in the art that the present disclosure can be modified in many ways without departing from the scope of the invention as defined by the claims.

### List of acronyms and abbreviations

- 3GPP: Third Generation Partnership Project
- 5G: 5th Generation
- AF: application function
- AI: artificial intelligence
- AMF: access and mobility management function
- FL: federated learning
- KPI: key performance indicator
- MDAS: management data analytics service
- MDT: minimization of drive tests
- ML: machine learning
- MtLF: model training logical function
- NF: network function
- NG: next generation
- NG-RAN: next generation radio access network
- NWDAF: network data analytics function
- OAM: operations, administration and maintenance
- QoE: quality of experience
- QoS: quality of service
- RAN: radio access network
- RAT: radio access technology
- RLF: radio link failure
- RRM: radio resource management
- RSRP: reference signal received power
- RSRQ: reference signal received quality
- SINR: signal-to-noise and interference ratio
- SUPI: subscription permanent identifier
- UE: user equipment

## Claims

1. An apparatus of a radio access network entity (10) of a mobile or cellular network, the apparatus comprising
receiving circuitry (11) configured to receive, from a first machine learning model training data collection entity, first machine learning model training input data,
analyzing circuitry (12) configured to analyze said first machine learning model training input data for malicious input detection, and
deducing circuitry (13) configured to deduce, based on a result of said analyzing, whether said first machine learning model training data collection entity is suspected to be compromised, and
**characterized in that** said first machine learning model training input data is for training a machine learning model for network optimization, wherein network optimizations include network energy saving, load balancing, and mobility optimization, and **in that** the apparatus further comprises a transmitting circuitry (14) configured to transmit, if said first machine learning model training data collection entity is suspected to be compromised, information to a core network entity (30) indicative of that said first machine learning model training data collection entity is suspected to be compromised.

2. The apparatus according to claim 1, further comprising
applying circuitry (21) configured to apply an anomaly detection during machine learning model training data pre-processing of said first machine learning model training input data.

3. The apparatus according to claim 1 or 2, further comprising
receiving circuitry (11) configured to receive, from at least one second machine learning model training data collection entity, second machine learning model training input data.

4. The apparatus according to claim 3, further comprising
correlating circuitry (22) configured to statistically correlate said first machine learning model training input data with said second machine learning model training input data to detect biases in said first machine learning model training input data.

5. The apparatus according to any of claims 1 to 4, further comprising
negotiating circuitry (23) configured to negotiate a handover decision for a third machine learning model training data collection entity towards said radio access network entity,
receiving circuitry (11) configured to receive, from said core network entity, information indicative of that said third machine learning model training data collection entity is suspected to be compromised, and
setting circuitry (24) configured to set to ignore third machine learning model training input data from said third machine learning model training data collection entity.

6. An system of a mobile or cellular network comprising a first radio access network entity (10) and a core network entity (30), wherein the first radio access network entity (10) is configured to
receive, from a first machine learning model training data collection entity, first machine learning model training input,
analyze said first machine learning model training input data for malicious input detection, and
deduce, based on a result of said analyzing, whether said first machine learning model training data collection entity is suspected to be compromised, and
wherein the system is **characterized in that** said first machine learning model training input data is for training a machine learning model for network optimization, wherein network optimizations include network energy saving, load balancing, and mobility optimization, and **in that** the first radio network entity (10) is further configured to transmit, if said first machine learning model training data collection entity is suspected to be compromised, information to said core network entity (30) indicative of that said first machine learning model training data collection entity is suspected to be compromised.

7. The system according to claim 6, wherein the core network entity (30) is further configured to
receive, from the first radio access network entity (10), information indicative of that a first machine learning model training data collection entity is suspected to be compromised, and to
receive information indicative of that said first machine learning model training data collection entity is handed over towards a second radio access network entity, and
transmit, to said second radio access network entity, information indicative of that said first machine learning model training data collection entity is suspected to be compromised.

8. The system according to claim 7, wherein the core network entity is further configured to
transmit, towards a data storage entity, said information indicative of that said first machine learning model training data collection entity is suspected to be compromised.

9. A method in a mobile or cellular network comprising
receiving (S71), at a first radio access network entity (10) from a first machine learning model training data collection entity, first machine learning model training input data for training a machine learning model for network optimization, wherein network optimizations include network energy saving, load balancing, and mobility optimization,
analyzing (S72), by said first radio access network entity (10), said first machine learning model training input data for malicious input detection, and
deducing (S73), by said first radio access network entity (10), based on a result of said analyzing, whether said first machine learning model training data collection entity is suspected to be compromised, and
**characterized in that** said first machine learning model training input data is for training a machine learning model for network optimization, wherein network optimizations include network energy saving, load balancing, and mobility optimization, and **in that** the method further comprises transmitting (S74, S81), from said first radio access network entity (10) to a core network entity (30), if said first machine learning model training data collection entity is suspected to be compromised, information indicative of that said first machine learning model training data collection entity is suspected to be compromised.

10. The method according to claim 9, further comprising
applying, by said first radio access network entity (10), an anomaly detection during machine learning model training data pre-processing of said first machine learning model training input data.

11. The method according to claim 9 or 10, further comprising
receiving, at said first radio access network entity (10) from at least one second machine learning model training data collection entity, second machine learning model training input data.

12. The method according to claim 11, further comprising
statistically correlating, by said first radio access network entity (10), said first machine learning model training input data with said second machine learning model training input data to detect biases in said first machine learning model training input data.

13. The method according to any of claims 9 to 12, further comprising
negotiating, by said first radio access network entity (10), a handover decision for a third machine learning model training data collection entity towards said first radio access network entity,
receiving, at said first radio access network entity (10) from said core network entity (30), information indicative of that said third machine learning model training data collection entity is suspected to be compromised, and
setting, by said first radio access network entity (10), to ignore third machine learning model training input data from said third machine learning model training data collection entity.

14. The method of according to any of claims 9 to 13, further comprising:
receiving (S82), at said core network entity (30), information indicative of that said first machine learning model training data collection entity is handed over towards a second radio access network entity, and
transmitting (S83), from said core network entity (30) to said second radio access network entity, information indicative of that said first machine learning model training data collection entity is suspected to be compromised.

15. The method according to claim 14, further comprising
transmitting, from said core network entity (30) towards a data storage entity, said information indicative of that said first machine learning model training data collection entity is suspected to be compromised.

## Patentansprüche

1. Einrichtung einer Funkzugangsnetzwerkentität (10) eines mobilen oder zellularen Netzwerks, wobei die Einrichtung Folgendes umfasst
eine Empfangsschaltung (11), die dazu ausgelegt ist, erste Maschinenlernmodelltrainingseingangsdaten von einer ersten Maschinenlernmodelltrainingsdatensammelentität zu empfangen,
eine Analyseschaltung (12), die dazu ausgelegt ist, die ersten Maschinenlernmodelltrainingseingangsdaten auf eine bösartige Eingangsdetektion zu analysieren, und
eine Folgerungsschaltung (13), die dazu ausgelegt ist, auf Basis eines Ergebnisses des Analysierens zu folgern, ob vermutet wird, dass die erste Maschinenlernmodelltrainingsdatensammelentität beeinträchtigt wird, und
**dadurch gekennzeichnet, dass** die ersten Maschinenlernmodelltrainingseingangsdaten dem Trainieren eines Maschinenlernmodells für eine Netzwerkoptimierung dienen, wobei Netzwerkoptimierungen eine Netzwerkenergieeinsparung, einen Lastausgleich und eine Mobilitätsoptimierung beinhalten, und dadurch, dass die Einrichtung ferner eine Übertragungsschaltung (14) umfasst, die, wenn vermutet wird, dass die erste Maschinenlernmodelltrainingsdatensammelentität beeinträchtigt wird, dazu ausgelegt ist, Informationen zu einer Kernnetzwerkentität (30) zu übertragen, die anzeigen, dass vermutet wird, dass die erste Maschinenlernmodelltrainingsdatensammelentität beeinträchtigt wird.

2. Einrichtung nach Anspruch 1, die ferner Folgendes umfasst
eine Anwendungsschaltung (21), die dazu ausgelegt ist, während einer Vorverarbeitung von Maschinenlernmodelltrainingsdaten der ersten Maschinenlernmodelltrainingseingangsdaten eine Anomaliedetektion anzuwenden.

3. Einrichtung nach Anspruch 1 oder 2, die ferner Folgendes umfasst
eine Empfangsschaltung (11), die dazu ausgelegt ist, zweite Maschinenlernmodelltrainingseingangsdaten von mindestens einer zweiten Maschinenlernmodelltrainingsdatensammelentität zu empfangen.

4. Einrichtung nach Anspruch 3, die ferner Folgendes umfasst
eine Korrelierungsschaltung (22), die dazu ausgelegt ist, die ersten Maschinenlernmodelltrainingseingangsdaten mit zweiten Maschinenlernmodelltrainingseingangsdaten statistisch zu korrelieren, um in den ersten Maschinenlernmodelltrainingseingangsdaten Tendenzen zu detektieren.

5. Einrichtung nach einem der Ansprüche 1 bis 4, die ferner Folgendes umfasst
eine Aushandlungsschaltung (23), die dazu ausgelegt ist, eine Übergabeentscheidung für eine dritte Maschinenlernmodelltrainingsdatensammelentität an die Funkzugangsnetzwerkentität auszuhandeln,
eine Empfangsschaltung (11), die dazu ausgelegt ist, von der Kernnetzwerkentität Informationen zu empfangen, die anzeigen, dass vermutet wird, dass die dritte Maschinenlernmodelltrainingsdatensammelentität beeinträchtigt wird, und
eine Einstellungsschaltung (24), die dazu ausgelegt ist, dritte Maschinenlernmodelltrainingseingangsdaten von der dritten Maschinenlernmodelltrainingsdatensammelentität zu ignorieren.

6. System eines mobilen oder zellularen Netzwerks, das eine erste Funkzugangsnetzwerkentität (10) und eine Kernnetzwerkentität (30) umfasst, wobei die erste Funkzugangsnetzwerkentität (10) zu Folgendem ausgelegt ist
Empfangen eines ersten Maschinenlernmodelltrainingseingangs von einer ersten Maschinenlernmodelltrainingsdatensammelentität,
Analysieren der ersten Maschinenlernmodelltrainingseingangsdaten auf eine bösartige Eingangsdetektion, und
Folgern auf Basis eines Ergebnisses des Analysierens, ob vermutet wird, dass die erste Maschinenlernmodelltrainingsdatensammelentität beeinträchtigt wird, und
wobei das System **dadurch gekennzeichnet ist, dass** die ersten Maschinenlernmodelltrainingseingangsdaten dem Trainieren eines Maschinenlernmodells für eine Netzwerkoptimierung dienen, wobei Netzwerkoptimierungen eine Netzwerkenergieeinsparung, einen Lastausgleich und eine Mobilitätsoptimierung beinhalten, und dadurch, dass die erste Funknetzwerkentität (10), wenn vermutet wird, dass die erste Maschinenlernmodelltrainingsdatensammelentität beeinträchtigt wird, ferner dazu ausgelegt ist, Informationen zur Kernnetzwerkentität (30) zu übertragen, die anzeigen, dass vermutet wird, dass die erste Maschinenlernmodelltrainingsdatensammelentität beeinträchtigt wird.

7. System nach Anspruch 6, wobei die Kernnetzwerkentität (30) ferner zu Folgendem ausgelegt ist
Empfangen von Informationen, die anzeigen, dass vermutet wird, dass die dritte Maschinenlernmodelltrainingsdatensammelentität beeinträchtigt wird, von der ersten Funkzugangsnetzwerkentität (10), und
Empfangen von Informationen, die anzeigen, dass die erste Maschinenlernmodelltrainingsdatensammelentität an eine zweiten Funkzugangsnetzwerkentität übergeben wird, und
Übertragen von Informationen, die anzeigen, dass vermutet wird, dass die erste Maschinenlernmodelltrainingsdatensammelentität beeinträchtigt wird, zur zweiten Funkzugangsnetzwerkentität.

8. System nach Anspruch 7, wobei die Kernnetzwerkentität ferner zu Folgendem ausgelegt ist
Übertragen der Informationen, die anzeigen, dass vermutet wird, dass die erste Maschinenlernmodelltrainingsdatensammelentität beeinträchtigt wird, zu einer Datenspeicherentität.

9. Verfahren in einem mobilen oder zellularen Netzwerk, das Folgendes umfasst
Empfangen (S71) von ersten Maschinenlernmodelltrainingseingangsdaten zum Trainieren eines Maschinenlernmodells für eine Netzwerkoptimierung an einer ersten Funkzugangsnetzwerkentität (10) von einer ersten Maschinenlernmodelltrainingsdatensammelentität, wobei Netzwerkoptimierungen eine Netzwerkenergieeinsparung, einen Lastausgleich und eine Mobilitätsoptimierung beinhalten,
Analysieren (S72) der ersten Maschinenlernmodelltrainingseingangsdaten durch die erste Funkzugangsnetzwerkentität (10) auf eine bösartige Eingangsdetektion, und
Folgern (S73) durch die erste Funkzugangsnetzwerkentität (10) auf Basis eines Ergebnisses des Analysierens, ob vermutet wird, dass die erste Maschinenlernmodelltrainingsdatensammelentität beeinträchtigt wird, und
**dadurch gekennzeichnet, dass** die ersten Maschinenlernmodelltrainingseingangsdaten dem Trainieren eines Maschinenlernmodells für eine Netzwerkoptimierung dienen, wobei Netzwerkoptimierungen eine Netzwerkenergieeinsparung, einen Lastausgleich und eine Mobilitätsoptimierung beinhalten, und dadurch, dass das Verfahren ferner das Übertragen (S74, S81) von Informationen, die anzeigen, dass vermutet wird, dass die erste Maschinenlernmodelltrainingsdatensammelentität beeinträchtigt wird, von der ersten Funkzugangsnetzwerkentität (10) zu einer Kernnetzwerkentität (30) umfasst, wenn vermutet wird, dass die erste Maschinenlernmodelltrainingsdatensammelentität beeinträchtigt wird.

10. Verfahren nach Anspruch 9, das ferner Folgendes umfasst
Anwenden einer Anomaliedetektion während einer Vorverarbeitung von Maschinenlernmodelltrainingsdaten der ersten Maschinenlernmodelltrainingseingangsdaten durch die erste Funkzugangsnetzwerkentität (10).

11. Verfahren nach Anspruch 9 oder 10, das ferner Folgendes umfasst
Empfangen von zweiten Maschinenlernmodelltrainingseingangsdaten an der ersten Funkzugangsnetzwerkentität (10) von mindestens einer zweiten Maschinenlernmodelltrainingsdatensammelentität.

12. Verfahren nach Anspruch 11, das ferner Folgendes umfasst
statistisches Korrelieren der ersten Maschinenlernmodelltrainingseingangsdaten mit den zweiten Maschinenlernmodelltrainingseingangsdaten durch die erste Funkzugangsnetzwerkentität (10), um in den ersten Maschinenlernmodelltrainingseingangsdaten Tendenzen zu detektieren.

13. Verfahren nach einem der Ansprüche 9 bis 12, das ferner Folgendes umfasst
Aushandeln einer Übergabeentscheidung durch die erste Funkzugangsnetzwerkentität (10) für eine dritte Maschinenlernmodelltrainingsdatensammelentität an die erste Funkzugangsnetzwerkentität,
Empfangen von Informationen, die anzeigen, dass vermutet wird, dass die dritte Maschinenlernmodelltrainingsdatensammelentität beeinträchtigt wird, an der ersten Funkzugangsnetzwerkentität (10) von der Kernnetzwerkentität (30), und
Einstellen des Ignorierens von dritten Maschinenlernmodelltrainingseingangsdaten von der dritten Maschinenlernmodelltrainingsdatensammelentität durch die erste Funkzugangsnetzwerkentität (10).

14. Verfahren nach einem der Ansprüche 9 bis 13, das ferner Folgendes umfasst:
Empfangen (S82) von Informationen, die anzeigen, dass die erste Maschinenlernmodelltrainingsdatensammelentität an eine zweite Funkzugangsnetzwerkentität übergeben wird, an der Kernnetzwerkentität (30), und
Übertragen (S83) von Informationen, die anzeigen, dass vermutet wird, dass die erste Maschinenlernmodelltrainingsdatensammelentität beeinträchtigt wird, von der Kernnetzwerkentität (30) zur zweiten Funkzugangsnetzwerkentität.

15. Verfahren nach Anspruch 14, das ferner Folgendes umfasst
Übertragen der Informationen, die anzeigen, dass vermutet wird, dass die erste Maschinenlernmodelltrainingsdatensammelentität beeinträchtigt wird, von der Kernnetzwerkentität (30) zu einer Datenspeicherentität.

## Revendications

1. Appareil d'une entité de réseau d'accès radio (10) d'un réseau mobile ou cellulaire, l'appareil comprenant
une circuiterie de réception (11) configurée pour recevoir d'une première entité de collecte de données d'entraînement de modèle d'apprentissage machine des premières données d'entrée d'entraînement de modèle d'apprentissage machine,
une circuiterie d'analyse (12) configurée pour analyser lesdites premières données d'entrée d'entraînement de modèle d'apprentissage machine pour une détection d'entrées malveillantes, et
une circuiterie de déduction (13) configurée pour déduire, sur la base d'un résultat de ladite analyse, si ladite première entité de collecte de données d'entraînement de modèle d'apprentissage machine est suspectée d'être compromise, et
**caractérisé en ce que** lesdites premières données d'entrée d'entraînement de modèle d'apprentissage machine sont destinées à entraîner un modèle d'apprentissage machine pour une optimisation de réseau, les optimisations de réseau comportant une économie d'énergie de réseau, un équilibrage de charge et une optimisation de la mobilité, et **en ce que** l'appareil comprend en outre une circuiterie de transmission (14) configurée pour transmettre, si ladite première entité de collecte de données d'entraînement de modèle d'apprentissage machine est suspectée d'être compromise, des informations à une entité de réseau central (30) indiquant que ladite première entité de collecte de données d'entraînement de modèle d'apprentissage machine est suspectée d'être compromise.

2. Appareil selon la revendication 1, comprenant en outre
une circuiterie d'application (21) configurée pour appliquer une détection d'anomalie lors d'un prétraitement de données d'entraînement de modèle d'apprentissage machine desdites premières données d'entrée d'entraînement de modèle d'apprentissage machine.

3. Appareil selon la revendication 1 ou 2, comprenant en outre
une circuiterie de réception (11) configurée pour recevoir d'au moins une deuxième entité de collecte de données d'entraînement de modèle d'apprentissage machine, des deuxièmes données d'entrée d'entraînement de modèle d'apprentissage machine.

4. Appareil selon la revendication 3, comprenant en outre
une circuiterie de corrélation (22) configurée pour corréler statistiquement lesdites premières données d'entrée d'entraînement de modèle d'apprentissage machine avec lesdites deuxièmes données d'entrée d'entraînement de modèle d'apprentissage machine afin de détecter des biais dans lesdites premières données d'entrée d'entraînement de modèle d'apprentissage machine.

5. Appareil selon l'une des revendications 1 à 4, comprenant en outre une circuiterie de négociation (23) configurée pour négocier une décision de transfert intercellulaire pour une troisième entité de collecte de données d'entraînement de modèle d'apprentissage machine vers ladite entité de réseau d'accès radio,
une circuiterie de réception (11) configurée pour recevoir de ladite entité de réseau central des informations indiquant que ladite troisième entité de collecte de données d'entraînement de modèle d'apprentissage machine est suspectée d'être compromise, et
une circuiterie de réglage (24) configurée pour effectuer un réglage pour ignorer les troisièmes données d'entrée d'entraînement de modèle d'apprentissage machine provenant de ladite troisième entité de collecte de données d'entraînement de modèle d'apprentissage machine.

6. Système d'un réseau mobile ou cellulaire comprenant une première entité de réseau d'accès radio (10) et une entité de réseau central (30), dans lequel la première entité de réseau d'accès radio (10) est configurée pour
recevoir d'une première entité de collecte de données d'entraînement de modèle d'apprentissage machine une première entrée d'entraînement de modèle d'apprentissage machine,
analyser lesdites premières données d'entrée d'entraînement de modèle d'apprentissage machine pour une détection d'entrées malveillantes, et
déduire, sur la base d'un résultat de ladite analyse, si ladite première entité de collecte de données d'entraînement de modèle d'apprentissage machine est suspectée d'être compromise, et
dans lequel le système est **caractérisé en ce que** lesdites premières données d'entrée d'entraînement de modèle d'apprentissage machine sont destinées à entraîner un modèle d'apprentissage machine pour une optimisation de réseau, les optimisations de réseau comportant une économie d'énergie de réseau, un équilibrage de charge et une optimisation de la mobilité, et **en ce que** la première entité de réseau radio (10) est en outre configurée pour transmettre, si ladite première entité de collecte de données d'entraînement de modèle d'apprentissage machine est suspectée d'être compromise, des informations à ladite entité de réseau central (30) indiquant que ladite première entité de collecte de données d'entraînement de modèle d'apprentissage machine est suspectée d'être compromise.

7. Système selon la revendication 6, dans lequel l'entité de réseau central (30) est en outre configurée pour
recevoir de la première entité de réseau d'accès radio (10) des informations indiquant qu'une première entité de collecte de données d'entraînement de modèle d'apprentissage machine est suspectée d'être compromise, et pour
recevoir des informations indiquant le transfert intercellulaire de ladite première entité de collecte de données d'entraînement de modèle d'apprentissage machine vers une deuxième entité de réseau d'accès radio, et
transmettre à ladite deuxième entité de réseau d'accès radio des informations indiquant que ladite première entité de collecte de données d'entraînement de modèle d'apprentissage machine est suspectée d'être compromise.

8. Système selon la revendication 7, dans lequel l'entité de réseau central est en outre configurée pour transmettre à une entité de stockage de données lesdites informations indiquant que ladite première entité de collecte de données d'entraînement de modèle d'apprentissage machine est suspectée d'être compromise.

9. Procédé dans un réseau mobile ou cellulaire comprenant la réception (S71), sur une première entité de réseau d'accès radio (10) d'une première entité de collecte de données d'entraînement de modèle d'apprentissage machine, de premières données d'entrée d'entraînement de modèle d'apprentissage machine pour entraîner un modèle d'apprentissage machine pour une optimisation de réseau, les optimisations de réseau comportant une économie d'énergie de réseau, un équilibrage de charge et une optimisation de la mobilité,
l'analyse (S72), par ladite première entité de réseau d'accès radio (10), desdites premières données d'entrée d'entraînement de modèle d'apprentissage machine pour une détection d'entrées malveillantes, et
la déduction (S73), par ladite première entité de réseau d'accès radio (10), sur la base d'un résultat de ladite analyse, précisant si ladite première entité de collecte de données d'entraînement de modèle d'apprentissage machine est suspectée d'être compromise, et
**caractérisé en ce que** lesdites premières données d'entrée d'entraînement de modèle d'apprentissage machine sont destinées à entraîner un modèle d'apprentissage machine pour une optimisation de réseau, les optimisations de réseau comportant une économie d'énergie de réseau, un équilibrage de charge et une optimisation de la mobilité, et **en ce que** le procédé comprend en outre la transmission (S74, S81), de ladite première entité de réseau d'accès radio (10) à une entité de réseau central (30), si ladite première entité de collecte de données d'entraînement de modèle d'apprentissage machine est suspectée d'être compromise, d'informations indiquant que ladite première entité de collecte de données d'entraînement de modèle d'apprentissage machine est suspectée d'être compromise.

10. Procédé selon la revendication 9, comprenant en outre
l'application, par ladite première entité de réseau d'accès radio (10), d'une détection d'anomalie lors d'un prétraitement de données d'entraînement de modèle d'apprentissage machine desdites premières données d'entrée d'entraînement de modèle d'apprentissage machine.

11. Procédé selon la revendication 9 ou 10, comprenant en outre
la réception, sur ladite première entité de réseau d'accès radio (10) d'au moins une deuxième entité de collecte de données d'entraînement de modèle d'apprentissage machine, de deuxièmes données d'entrée d'entraînement de modèle d'apprentissage machine.

12. Procédé selon la revendication 11, comprenant en outre
la corrélation statistique, par ladite première entité de réseau d'accès radio (10), desdites premières données d'entrée d'entraînement de modèle d'apprentissage machine avec lesdites deuxièmes données d'entrée d'entraînement de modèle d'apprentissage machine afin de détecter des biais dans lesdites premières données d'entrée d'entraînement de modèle d'apprentissage machine.

13. Procédé selon l'une des revendications 9 à 12, comprenant en outre la négociation, par ladite première entité de réseau d'accès radio (10), d'une décision de transfert intercellulaire pour une troisième entité de collecte de données d'entraînement de modèle d'apprentissage machine vers ladite première entité de réseau d'accès radio,
la réception, sur ladite première entité de réseau d'accès radio (10) de ladite entité de réseau central (30), d'informations indiquant que ladite troisième entité de collecte de données d'entraînement de modèle d'apprentissage machine est suspectée d'être compromise, et
le réglage, par ladite première entité de réseau d'accès radio (10), pour ignorer les troisièmes données d'entrée d'entraînement de modèle d'apprentissage machine de ladite troisième entité de collecte de données d'entraînement de modèle d'apprentissage machine.

14. Procédé de selon l'une des revendications 9 à 13, comprenant en outre :
la réception (S82), sur ladite entité de réseau central (30), d'informations indiquant le transfert intercellulaire de ladite première entité de collecte de données d'entraînement de modèle d'apprentissage machine vers une deuxième entité de réseau d'accès radio, et
la transmission (S83), de ladite entité de réseau central (30) à ladite deuxième entité de réseau d'accès radio, d'informations indiquant que ladite première entité de collecte de données d'entraînement de modèle d'apprentissage machine est suspectée d'être compromise.

15. Procédé selon la revendication 14, comprenant en outre
la transmission, de ladite entité de réseau central (30) à une entité de stockage de données, desdites informations indiquant que ladite première entité de collecte de données d'entraînement de modèle d'apprentissage machine est suspectée d'être compromise.
